# EUROPÄISCHE PATENTANMELDUNG

(11) **EP 1 366 843 A2**
(43) Veröffentlichungstag der Anmeldung: **03.12.2003**
(21) Anmeldenummer: 03012483.8
(22) Anmeldetag: 02.06.2003
(51) Int. Cl.: B23B 41/00, B23C 3/00

(54) **Vorrichtung zur Herstellung von Schräglochbohrungen in Rohren**

(30) Priorität: 31.05.2002 DE 20208512 U
(71) Anmelder: Plaggenborg, Bernd, 26169 Friesoythe (DE); Köppen, Lothar, 26655 Westerstede (DE)
(72) Erfinder: Plaggenborg, Bernd, 26169 Friesoythe (DE); Köppen, Lothar, 26655 Westerstede (DE)
(74) Vertreter: Eisenführ, Speiser & Partner

(57) **Zusammenfassung**

Die Erfindung betrifft eine Vorrichtung (1) zur Herstellung von Schräglochbohrungen in Rohren, insbesondere solcher aus Metall, z. B., VA-Stahl.

Aufgabe der Erfindung ist es, eine Vorrichtung (1) zur Herstellung von Metallpfosten vorzuschlagen, bei der die Nachteile wie Abbrechen oder Verbiegen des Bohrers sowie hohe Herstellungskosten und ästhetisch störende Schweißnähte nicht gegeben sind.

Vorrichtung (1) zur Herstellung von zwei exakt fluchtenden Bohrungen, die in einem Rohr, bevorzugt mit einem Kreisringquerschnitt, in einem Winkel im Bereich von 20° bis 80° bezogen auf die Senkrechte zum Rohr, hergestellt werden, wobei die Vorrichtung (1) mit wenigstens zwei Fräsvorrichtungen (2,3) ausgerüstet ist, wobei die beiden Fräsvorrichtungen (2,3) an ihrem vorderen Ende jeweils einen Fräsbohrkopf (4,5) aufnehmen, wobei beide Fräsköpfe (4,5) so ausgerichtet sind, dass sie sich entlang einer gemeinsamen Geraden bewegen und beide Fräsköpfe (4,5) einander so gegenüber angeordnet sind, dass sie bei der Aufeinanderzubewegung von unterschiedlichen Seiten in das Rohr eindringen.

## Beschreibung

Die Erfindung betrifft eine Vorrichtung zur Herstellung von Schräglochbohrungen in Rohren, insbesondere solcher aus Metall, z. B., VA-Stahl.

Wenn mit bisher üblichen Bohrvorrichtungen exakt fluchtende Schräglochbohrungen in Metallrohren ausgebildet werden sollen, so scheitern solche Vorhaben regelmäßig daran, dass der Bohrer, der am Metall versetzt aus dem rechten Winkel zum Rohr angesetzt wird, versucht, dem zu bohrenden Rohr "auszuweichen", was dazu führt, dass entweder der Bohrer selbst abbricht oder eine Verbiegung des Bohrers entsteht, aufgrund welcher es praktisch unmöglich ist, eine weitere fluchtende Bohrung auf der anderen Seite des Rohrs herzustellen.

Wenn solche Rohre Metallpfosten für Geländer von Treppen, Brüstungen oder dergleichen bilden und einen Handlauf, Geländerstreben und Zwischenstreben aufnehmen sollen, so werden regelmäßig seitlich in die Metallpfosten Aufnahmen eingebracht (geschweißt), welche Durchlässe aufweisen, die hinsichtlich ihrer Winkelstellung beliebig verstellbar sind, so dass beispielsweise Geländerstreben aus Metall diese Aufnahmen exakt durchsetzen können.

Diese bisher bekannten Lösungen weisen jedoch mehrere Nachteile auf. Einerseits sind sie vergleichsweise teuer, weil die Aufnahmen, die die Geländerstreben und die Metallpfosten miteinander verbinden, recht teuer sind. Darüber hinaus ist es ästhetisch wenig ansprechend, wenn bei einem Treppengeländer die Handläufe und Geländerstreben in einer Ebene neben den Geländerpfosten liegen.

Zur Vermeidung dieses ästhetischen Nachteils werden häufig die Handläufe oder Geländerstreben zwischen den Metallpfosten eingebracht und mit diesen verschweißt. Auch diese Methode hat jedoch ihren Nachteil, der insbesondere darin besteht, dass Schweißnähte entstehen, welche regelmäßig sehr aufwendig poliert werden müssen, damit sie auch ästhetischen Ansprüchen genügen können.

Aufgabe der Erfindung ist es nun, eine Vorrichtung zur Herstellung von Metallpfosten vorzuschlagen, bei denen die vorgenannten Nachteile nicht mehr gegeben sind.

Erfindungsgemäß wird eine Vorrichtung mit den Merkmalen nach Anspruch 1 vorgeschlagen. Vorteilhafte Weiterbildungen sind in den Unteransprüchen beschrieben.

Mit der erfindungsgemäßen Vorrichtung ist es möglich, Treppengeländerpfosten herzustellen, die von Bohrungen durchsetzt sind, die in einem Winkel von deutlich ungleich 90° zur Längsachse der Metallpfosten fluchten.

Erfindungsgemäß ist es möglich, dass die Handläufe oder auch Geländerstreben die Bohrungen durchsetzen, also einfacherweise durch die Metalipfosten geschoben werden können und dann beispielsweise mittels einer Sicherungsschraube die Metallpfosten in einem Winkel von 90° im Bereich der zu setzenden Streben zu fixieren.

Der besondere Vorteil der erfindungsgemäßen Lösung besteht darin, dass es nicht notwendig ist, Aufnahmen wie bei bisher bekannten Lösungen seitlich an den Pfosten anzubringen und darüber hinaus der Übergang zwischen Metallpfosten und Streben bzw. Handläufen sehr sauber und schweißnahtlos wie auch gratlos ausgeführt werden kann. Die erfindungsgemäße Struktur überzeugt durch ihre Einfachheit aber auch Schlichtheit und ist darüber hinaus erheblich kostengünstiger als bisherige Lösungen.

Die erfindungsgemäße Vorrichtung zur Ausführung der Schräglochbohrungen besteht aus einem Frässystem, bestehend aus zwei Fräseinrichtungen, die sich exakt gegenüberliegen. Wenn sich diese beiden Fräseinrichtungen aufeinander zu bewegen und sich zwischen den beiden Fräseinrichtungen ein Metallrohr, welches später den Geländerpfosten bilden soll, befindet, so wird in das Metallrohr in einem gewünschten Winkel beidseitig eine Bohrung eingebracht, wobei beide Bohrungen exakt miteinander fluchten.

Soll das Metallrohr mit mehreren nebeneinander liegenden fluchtenden Schräglochbohrungen versehen werden, so können entweder die erfindungsgemäßen Fräseinrichtungen nebeneinander in einem bestimmten Abstand voneinander angeordnet werden oder das Metallrohr wird nach jedem Arbeitsgang um ein bestimmtes Stück weitergeschoben, so dass dann im neuen Arbeitsgang die gewünschten fluchtenden Bohrungen ausgebildet werden können.

Mit der erfindungsgemäßen Vorrichtung können insbesondere Treppengeländerpfosten aus Edelstahl (z. B. VA-Stahl) mit Schräglochbohrungen bis zu 70° (bezogen auf den rechten Winkel zur Längsachse des Rohrs) hergestellt werden.

Für die Geländerherstellung werden dann entsprechende Pfosten aufgestellt und durch diese werden dann die Handläufe, Geländerstreben oder Zwischenstreben gezogen und diese werden dann bevorzugt mit einer Justierschraube oder Sicherungsschraube an den Pfosten befestigt.

Durch die Herstellung der erfindungsgemäßen Metallpfosten lässt sich auch insgesamt die Treppengeländermontagezeit verkürzen, die erfindungsgemäße Vorrichtung erlaubt eine rationelle, innerbetriebliche Vorfertigung mit entsprechend hohen Qualitätsansprüchen, die erfindungsgemäße Vorrichtung erlaubt auch die Herstellung von Treppengeländerpfosten, die insgesamt eine Treppengeländerfertigung ermöglichen, die ein erheblich besseres Oberflächenfinish und damit eine bessere Optik im Bereich der Durchdringung von Geländerstreben und Pfosten bewirkt.

Die Erfindung ist nachfolgend anhand eines Ausführungsbeispiels in den Zeichnungen näher erläutert. Es zeigen:
- Figur 1: eine Ansicht einer erfindungsgemäßen Vorrichtung zur Herstellung von Schräglochbohrungen,
- Figur 2: eine Alternativausführung zur Vorrichtung nach Figur 1,
- Figur 3: eine Aufsicht auf ein erfindungsgemäßes Rohr mit Schräglochbohrungen,
- Figur 4: eine Aufsicht auf ein erfindungsgemäßes Rohr mit Schräglochbohrungen aus einer anderen Perspektive als in Figur 3,
- Figur 5: eine Aufsicht auf ein Treppengeländer mit erfindungsgemäßem Treppengeländerpfosten,
- Figur 6: eine Seitenansicht der erfindungsgemäßen Vorrichtung,
- Figur 7: eine Ansicht des Unterbereichs des Spindeltisches,
- Figur 8: eine Ansicht der erfindungsgemäßen Vorrichtung mit zwei nebeneinanderliegenden Fräsvorrichtungen,
- Figur 9: zeigt eine Aufsicht auf eine erfindungsgemäße Einrichtung,
- Figur 10: eine solche Aufsicht aus einer anderen Perspektive,
- Figur 11: eine weitere detaillierte Aufsicht einer weiteren alternativen Einrichtung,
- Figur 12: eine weitere detaillierte Aufsicht schräg von der Seite,
- Figur 13: eine Aufsicht auf eine erfindungsgemäße Frässpindel mit Stütze,
- Figur 14: die Ansicht einer U-Bohrer-Stütze mit Stützrollen,
- Figur 15: eine U-Bohrer-Stütze mit Gleitlager,
- Figur 16: einen Coromant U-Bohrer mit Lauffläche für Stützrollen,
- Figur 17: eine Schrumpffutterstütze mit Stützrollen,
- Figur 18: eine Schrumpffutterstütze mit Gleitlager,
- Figur 19: ein Schrumpffutter,
- Figur 20: eine Aufsicht von alternativen Einrichtungen mit Ausspannlängen bei 12,5 mm Fräsdurchmesser,
- Figur 21: eine Aufsicht auf einen Coromant U-Bohrer,
- Figur 22: eine U-Bohrer Aufnahme,
- Figur 23: eine Funktionszeichnung eines U-Bohrers.

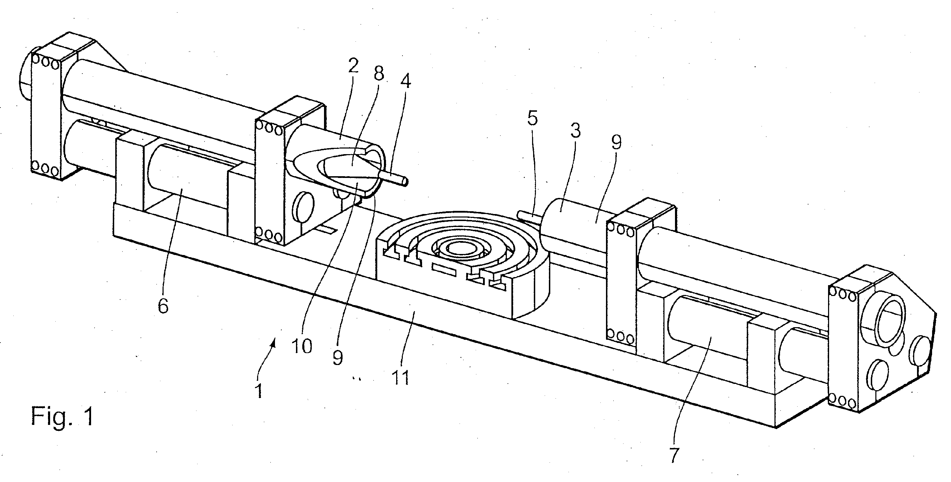

Figur 1 zeigt in der Aufsicht ein Frässystem 1 bestehend aus zwei Fräseinheiten 2 und 3, die sich exakt gegenüberliegen und die jeweils mit Fräsköpfen 4 und 5 versehen sind, die exakt auf einer gemeinsamen Geraden bewegt werden können, bevorzugt sich aufeinander zu bewegen oder voneinander weg bewegen.

Für die Schubbewegung der Köpfe ist ein Antrieb, vorzugsweise ein Spindelantrieb 6 und 7 vorgesehen, wobei für die Schubbewegung auch noch eine Steuervorrichtung (nicht dargestellt) vorgesehen ist, mittels der der exakte Vor- und Rückschub der Fräsköpfe eingestellt werden kann.

Im vorderen Bereich sind die Fräsköpfe auf einem kegelförmigen Stumpf 8 aufgesetzt, welcher seinerseits in einer Umhüllung 9 liegt, die im kegelstumpfförmigen Bereich eine Aufnahmemuffe 10 aufweist, die den Raum zwischen dem Kegelstumpf und dem Innenrohr exakt ausfüllt.

Schließlich ist der Vorderbereich der Fräseinrichtung zu einer Seite hin freigeschnitten, wie in der Figur 1 gut zu erkennen ist.

Beide Fräseinheiten sind auf einer Platte 11 gelagert.

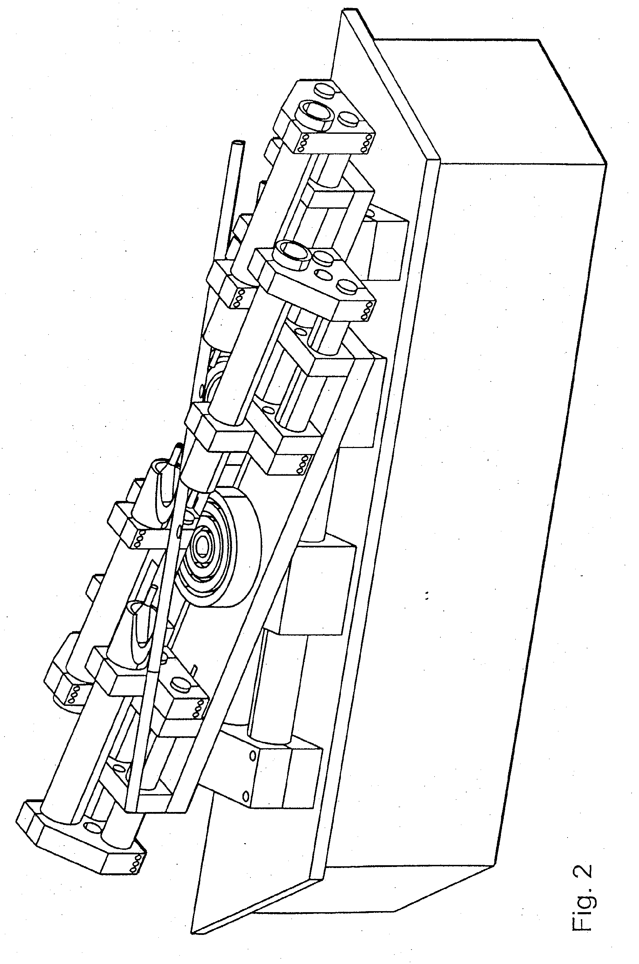

Figur 2 zeigt ein alternatives Ausführungsbeispiel für das erfindungsgemäße System nach Figur 1, wobei jedoch jeweils zwei Frässysteme nebeneinander angeordnet sind, so dass sich dann auch entsprechend immer zwei Fräseinheiten gegenüberliegen, so dass bei dem Einsatz dieser Fräseinheiten in ein einziges Rohr gleichzeitig zwei exakt fluchtende Bohrungen eingelassen werden können.

Die Halterung zur Fixierung des Rohres als auch zur Fixierung der einzelnen Fräseinheiten sind aus Vereinfachungsgründen nicht dargestellt.

Die jeweiligen Fräseinheiten bzw. die Platten sind jedoch drehbar gelagert, so dass durch die entsprechende Verstellung der Platten auch der Winkel der Fräseinheiten bzw. der Fräsköpfe zu dem zu bohrenden Rohr exakt eingestellt werden kann, wobei eine Winkelkennzeichnung vorgesehen ist, mittels der bei der Bedienung der exakte Schräglochwinkel für das Rohr eingestellt werden kann.

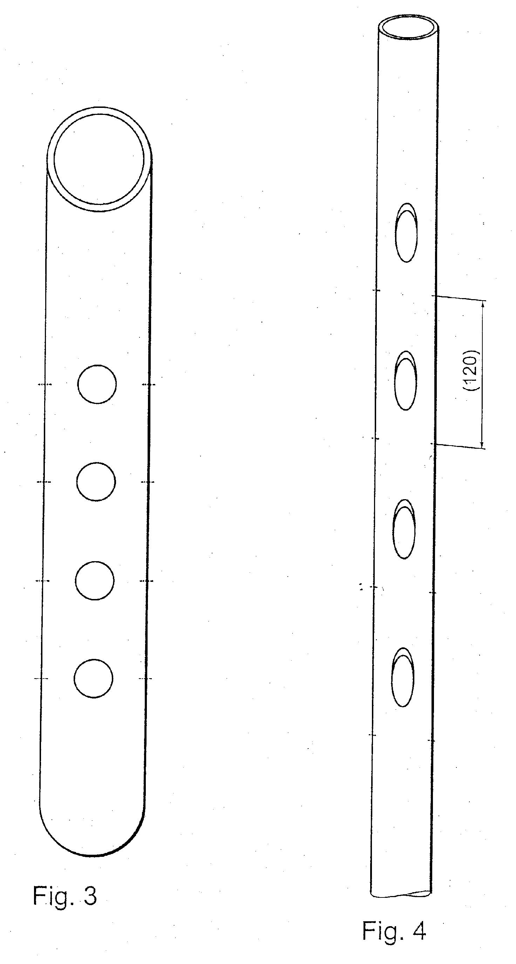

Figur 3 zeigt in einer Perspektive schräg von oben ein Teilrohr, vorzugsweise ein Rohr aus VA-Stahl, welches mit vier Schräglochbohrungen versehen ist. Diese Schräglochbohrungen durchsetzen sowohl die Vorderseite als auch die Rückseite des Rohres in exakt fluchtender Weise.

Figur 4 zeigt das in Figur 3 dargestellte Rohr aus einer anderen Perspektive, so dass auch die Richtung der Schräglochbohrungen besser zu erkennen ist. In der Figur ist auch die Position der Gewindebohrungen zu erkennen, mittels denen ein Stab, der in die Bohrung eingeschoben wird, fixiert werden kann, indem mittels einer Schraube in die Gewinde dieser Stab befestigt wird.

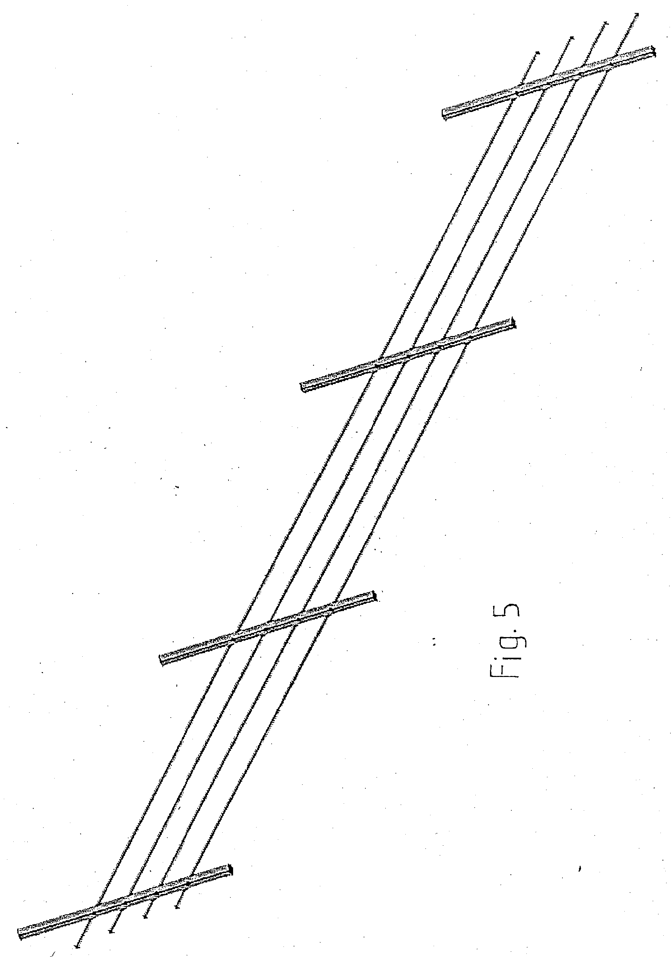

Figur 5 zeigt einen Ausschnitt aus einem Treppengeländer bestehend aus vier Pfosten, die wie die Rohre nach Figur 3 und 4 ausgebildet sind, und die entsprechende Streben aufnehmen, die durch die fluchtenden Bohrungen geschoben werden.

Soweit die Streben nicht von Anfang bis Ende ganz durchgeschoben werden können, sind die aufeinander stoßenden Stellen der Streben innerhalb der Pfosten gelagert, so dass die aufeinander stoßenden Stellen der jeweiligen Streben nach außen hin unsichtbar sind.

Es ist ferner möglich, die Streben innerhalb der Pfosten mittels Sicherungsschrauben zu fixieren, wobei die Schraublöcher an der treppenabgewandten Seite angebracht sind und somit von demjenigen, der die Treppe benutzt, nicht gesehen werden können.

Für die Erstellung der Treppe reicht es aus, die jeweiligen Steigungswinkel genau zu kennen und die jeweiligen Orte, an denen die Pfosten aufgestellt werden. In der Werkstatt kann dann bei der Vorfertigung des Treppengeländers das gesamte Treppenelement oder ein Teil davon fertiggestellt werden, ohne das es hierzu noch größerer Nacharbeitungen auf der Baustelle bedarf.

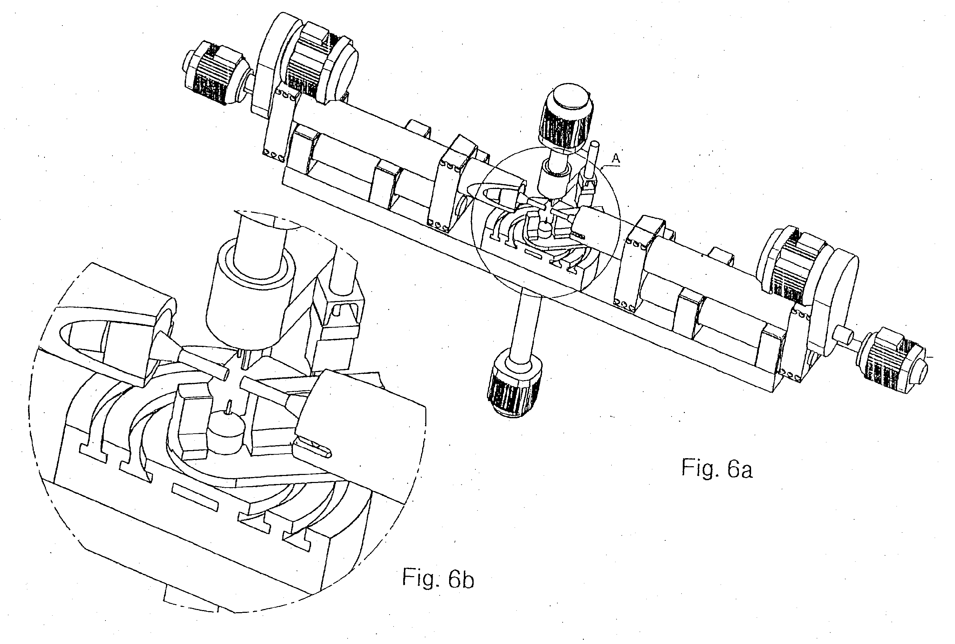

Figur 6a zeigt die erfindungsgemäße Vorrichtung aus der Seitenansicht, Figur 6b einen vergrößerten Detailausschnitt hieraus. Hierbei sind sich gegenüberstehenden Fräsvorrichtungen einerseits und die vertikal gegenüberliegenden Bohrvorrichtungen andererseits zu erkennen. Mit den Bohrern wird bei Bedarf oben und/oder unten eine Bohrung in das zu fräsende Rohr eingebracht, wobei diese Bohrung dann später als Sicherheitsbohrung dient.

Ferner sind in der Seitenansicht die verschiedenen Antriebsaggregate für die Fräsvorrichtung, Bohrvorrichtung als auch für den Spindelvortrieb zu erkennen.

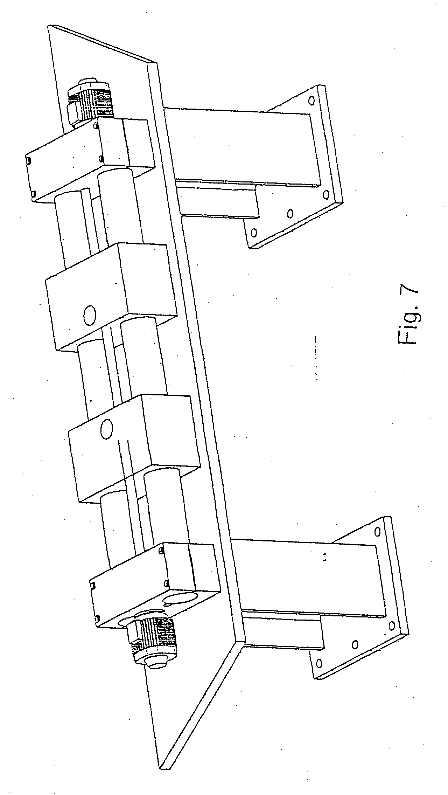

In Figur 7 ist der Unterbereich des in Figur 6 dargestellten Spindeltisches dargestellt.

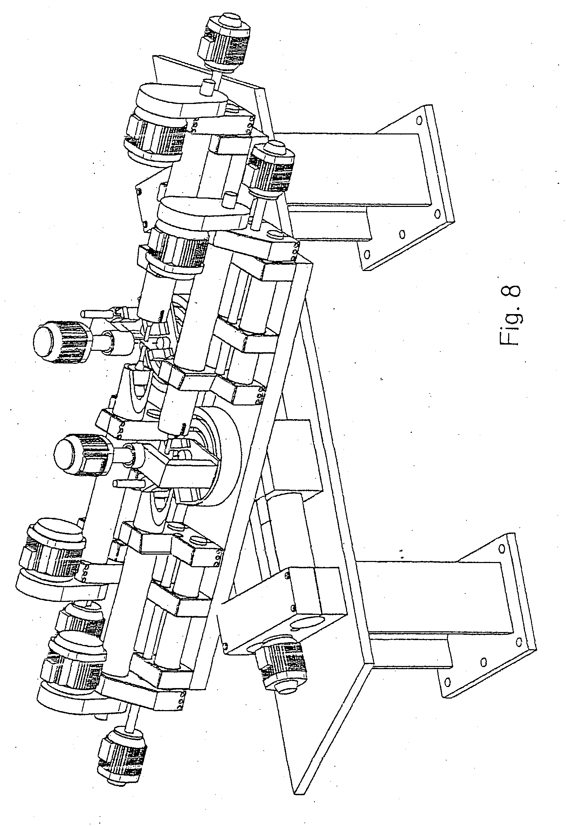

Figur 8 zeigt die erfindungsgemäße Vorrichtung, wobei zwei Fräsvorrichtungen nebeneinander und somit auch gegenüber liegen, so dass mit einer solchen Vorrichtung in einem einzigen Fräsgang zwei schräge Durchgangsbohrungen in einem Rohr ausgebildet werden können.

Je nach Spannbackenart in den Vierbackenfuttern oder Adapterstücken auf dem Rundtisch lassen sich runde, quadratische, rechteckige sowie diverse andere Materialquerschnitte (also Rohre) fräsen. Hierbei können Hohlprofile wie auch Vollmaterial Verwendung finden.

Die oberen und unteren Bohr- und Gewindebohreinheiten sind so konstruiert, dass kleinere Fräser zum Einsatz kommen können, evtl. für Kernlochbohrungen. Dadurch ist es möglich, Quadratrohr zu fertigen, welches um 45° gedreht, d. h. auf die Spitze gestellt wird, mit Gewinde für die Sicherungsschrauben (siehe Figur 4) zu versehen, wobei die nachfolgende Bohr- und Gewindebohreinheit das Gewinde fertigt.

Werden in den ersten beiden Frässpindeln Fräser verwendet, die im vorderen Bereich ein Durchmesser von Gewindekernlöchern haben und im hinteren Teil stufenförmig ansteigen, so ist es möglich, auch größere Gewinde von 20° bis 70° schräg in ein Vollmaterial einzubringen. Dabei übernimmt die zweite Fräseinheit den Gewindeschneidvorgang.

Zur exakten Winkelverstellung des Materials ist vorgesehen, die Vierbackenfutter mit einer Gradeinteilung zu versehen.

Mit den Vorschubmotoren des Basistisches lassen sich die Spindeltische linear verfahren, so dass eine Nut erzeugt werden kann. Werden zusätzlich noch die Vierbackenfutter gesteuert angetrieben, so kann die Maschine Konturen erzeugen.

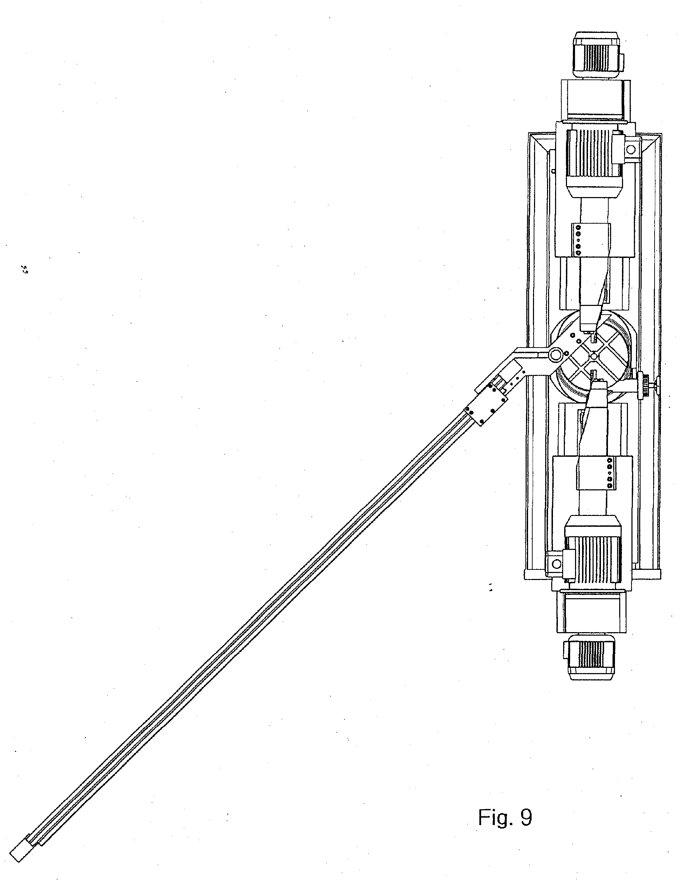

Figur 9 zeigt von oben die Aufsicht auf eine erfindungsgemäße Einrichtung, bei welcher jedoch die beiden Fräsvorrichtungen fest auf einer Unterlage gelagert sind, während hingegen die Zuführung für das zuzuführende und zu fräsende Rohr dreh- und verschiebbar gelagert ist, um somit das zu fräsende Rohr in einem gewünschten Winkel den Fräseinrichtungen zuzuführen. Die Rohrzuführung besteht aus einer Halterung, welche auf einem Untertisch beweglich, jedoch fixierbar, angeordnet ist. Mithin kann die Rohrzuführung zunächst einmal in der gewünschten Weise ausgerichtet werden (Winkeleinstellung etc.) und wird hiernach fixiert, so dass dann nur noch dass zu fräsende Rohr linear verschiebbar zwischen die Fräsköpfe verschoben wird.

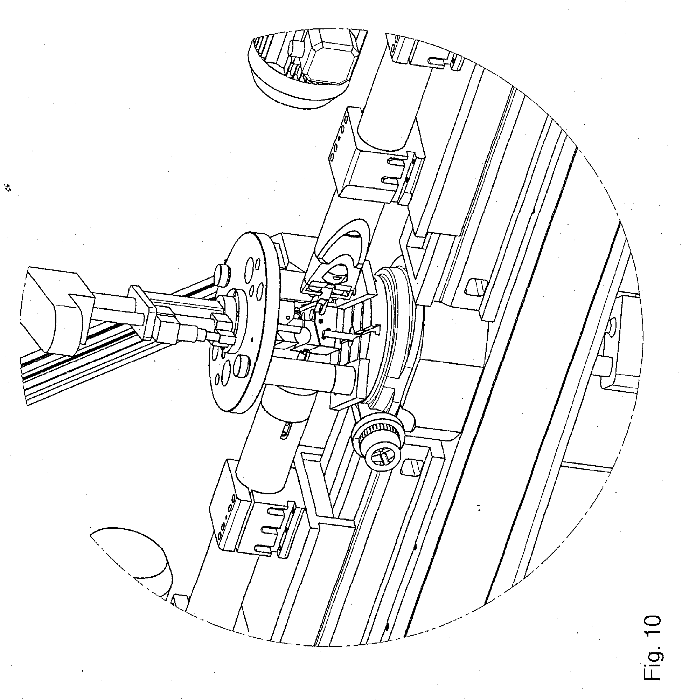

Figur 10 zeigt eine Ansicht von der Seite der Darstellung nach Figur 9. Hierbei ist jedoch darüber hinaus noch eine Bohreinrichtung zu erkennen, mittels der das zu fräsende Rohr mit Bohrungen versehen wird, die gleichzeitig auch ein Gewinde aufweisen, damit das zu fertigende Rohr später bei Aufnahme von Stäben in den gefrästen Öffnungen eine Befestigung dieser Stäbe mittels Schrauben in den Gewinden des Rohres erlaubt.

Für die Figuren 9 und 10 gilt das, was auch für alle anderen Figuren gilt. Auch soweit Einzelteile in diesen Zeichnungen nicht ausdrücklich beschrieben sind, so sind sie doch für den Fachmann ohne weiteres in ihrer Ausbildung und Funktion erkennbar und auch zur Erfindung gehörig offenbart. Im Bedarfsfall wird der Fachmann auch Merkmale, die nur in den Zeichnungen offenbart sind, mit zur Definition der Erfindung verwenden, ohne dass es hierzu der ausdrücklichen Erwähnung in der vorliegenden Beschreibung bedarf.

So ist beispielsweise die Funktion eines Bohrers, mit dem anschließend ein Gewinde für Sicherungsschrauben in das Rohr eingebracht wird, als solche bekannt, jedoch in Verbindung mit erfindungsgemäßen Einrichtung zum Fräsen von Löchern in einem schrägen Winkel zum Rohr neu und erfinderisch.

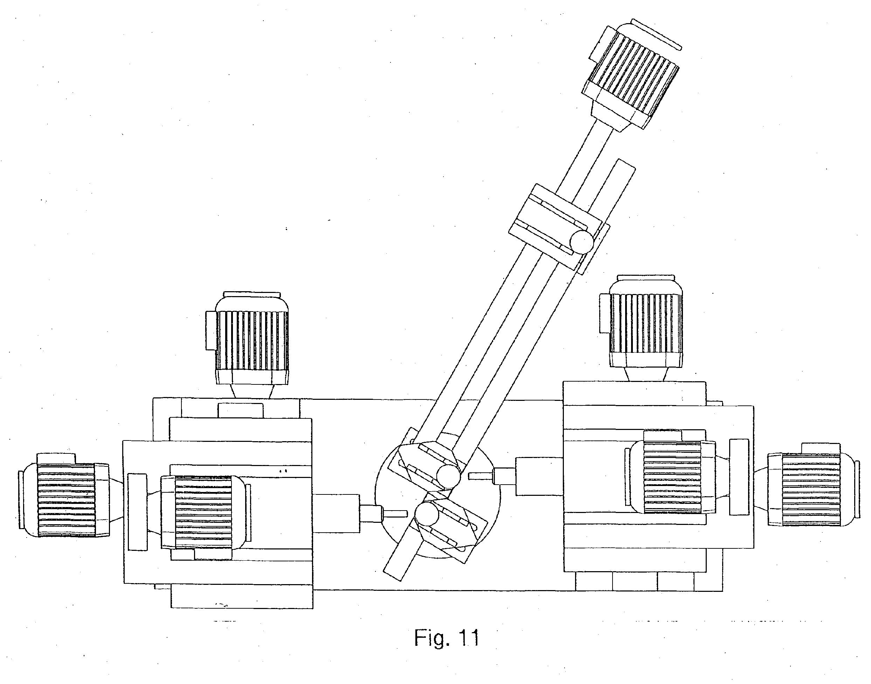

Während in den Figuren 9 und 10 dargestellt ist, dass die beiden Fräseinrichtungen und damit auch die Fräsköpfe in einer Linie gegenüberliegen, zeigt Figur 11 den seitlichen Versatz der gegenüberliegenden Fräsköpfe und damit der entsprechenden Fräsvorrichtung. Auf diese Weise können nicht nur, wie in Figur 9 und 10, gleichzeitig auch Öffnungen schräg in das Rohr gefräst werden, sondern diese Öffnungen sind dann auch entsprechend seitlich versetzt.

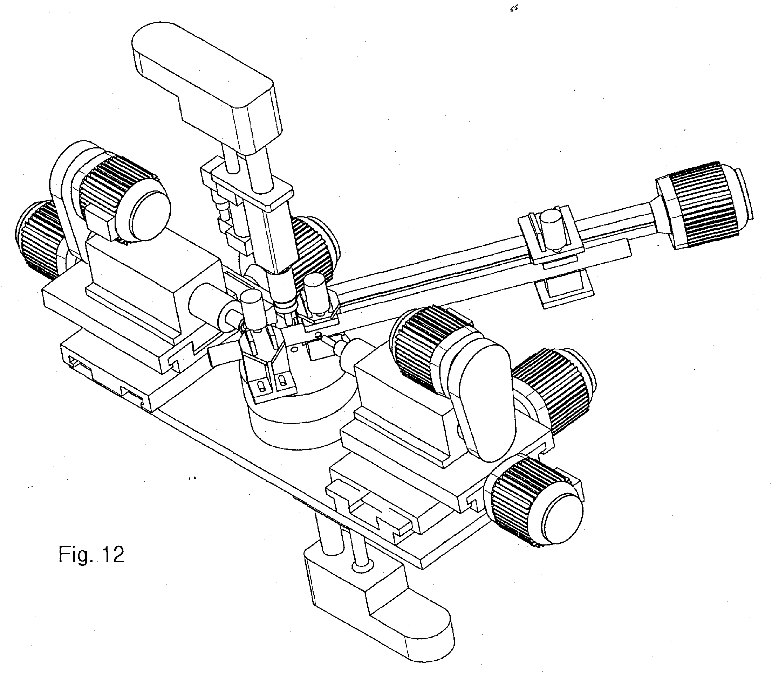

Figur 12 zeigt wiederum die Ansicht nach Figur 11 in einer etwas anderen Darstellung mit der auch von oben in das zu fräsende Rohr eindringenden Einrichtung zur Herstellung eines Gewindelochs für eine Sicherungsschraube.

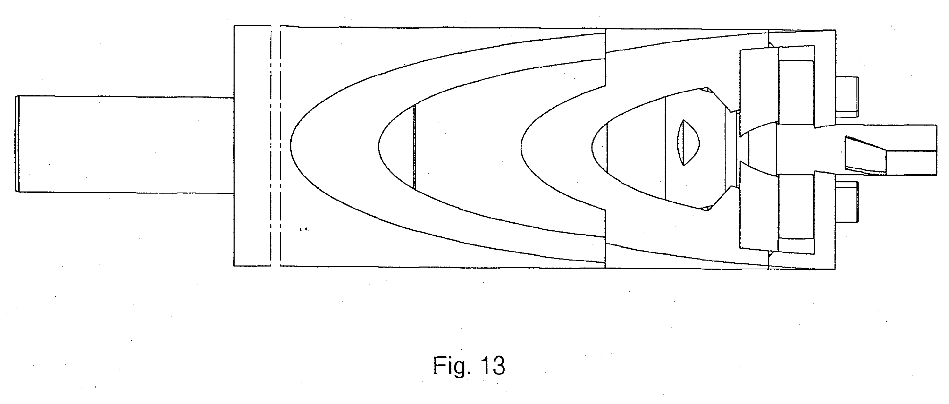

Figur 13 zeigt eine Frässpindel mit Stütze in einer detaillierten Ausführung. Eine solche Frässpindel ist bereits in Figur 1 dargestellt und ihr Aufbau ist in Figur 13 besser zu erkennen. Hierbei sieht man, dass die Frässpindel an ihrem vordersten Ende einen Coromant U-Bohrer als Fräseinrichtung aufnimmt, welche in einem Futter gelagert ist, welches seitlich abgestützt ist, um somit auch die Seitenkräfte hinreichend aufnehmen zu können.

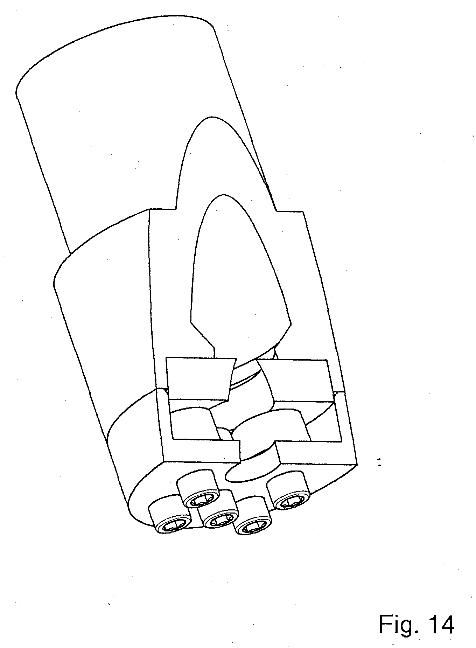

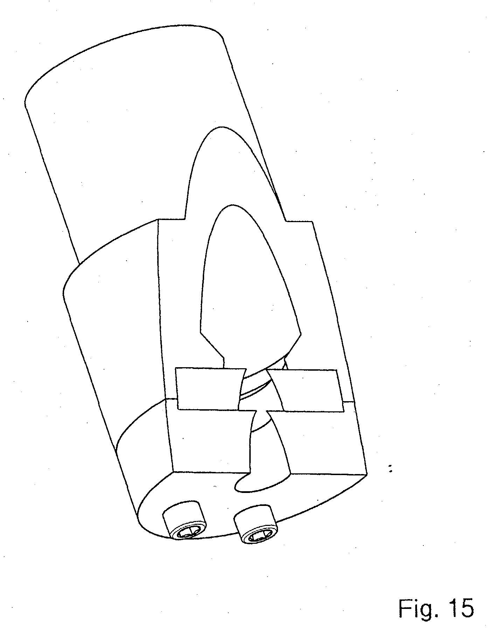

Figur 14 zeigt dabei die Bohrerstütze mit Stützrollen, während Figur 15 die Bohrerstütze mit einem Gleitlager zeigt.

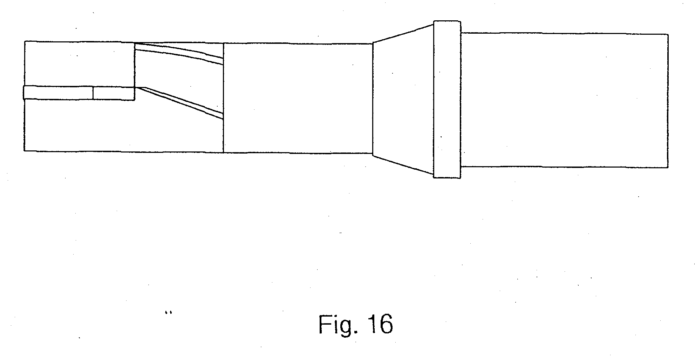

Figur 16 zeigt den Coromant U-Bohrer mit einer Lauffläche für die Stützrollen. Der dargestellte U-Bohrer hat einen Bohrdurchmesser von 27,3 mm.

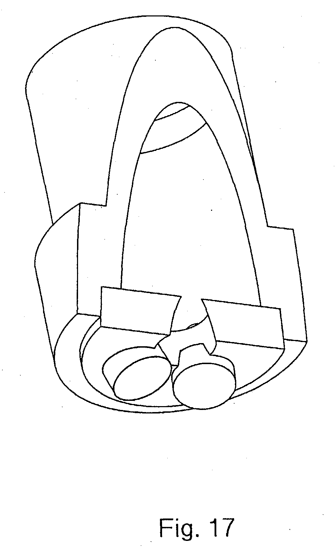

Figur 17 zeigt eine Schrumpffutterstütze mit Stützrollen, die an den zylinderischen Teil des Coromant U-Bohrers (siehe Figur 16) zur Anlage kommen und diesen seitlich abstützen und hierbei drehbar sind.

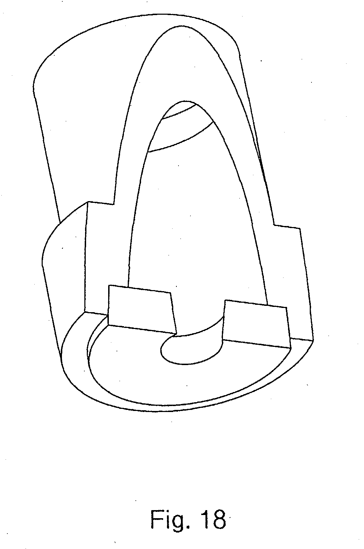

Figur 18 zeigt die Schrumpffutterstütze mit einem Gleitlager, welches so ausgeformt ist, dass es mit dem Schrumpffutter in einem Winkel von beispielsweise 15°, also auf 15° Schräge zum Einsatz kommt.

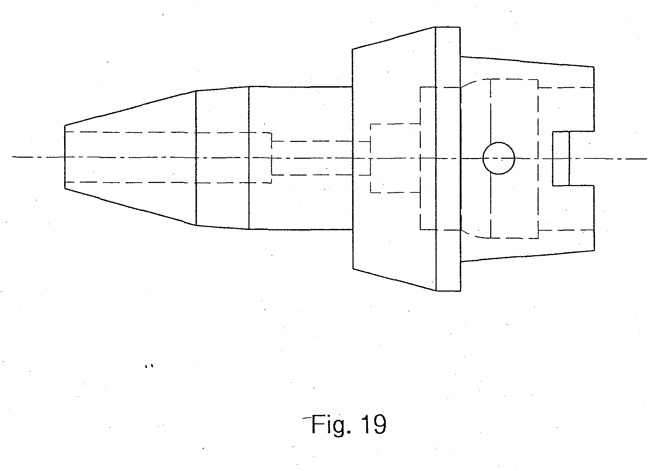

Figur 19 zeigt ein Schrumpffutter, welches einen Fräskopf bzw. Coromant U-Bohrer aufnehmen kann und welches in seinem vorderen Ende sich konisch verjüngt (zwischen 5° bis 25°, bevorzugt 15° geschliffen). Der U-Bohrer wird mit Druckschrauben am Schrumpffutter befestigt.

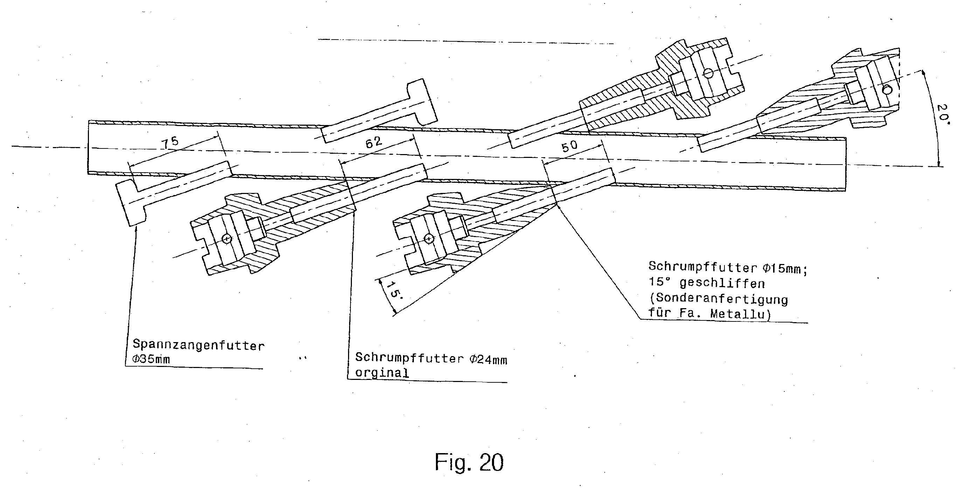

Figur 20 zeigt, dass mit einem solchen Schrumpffutter bei einem sehr spitzen Winkel (im dargestellten Beispiel 20°) der Bohrer nicht nur weit in das Rohr eindringen kann, sondern sicher gestützt wird, während bei einem üblichen Spannzangenfutter oder üblichen Schrumpffutter sehr große Seitenkräfte vom Fräskopf bzw. Bohrer aufzunehmen sind, was bei den entstehenden Kräften schnell zur Verformung bzw. Beschädigung und damit den gesamten Fräskopf bzw. Bohrkopf unbrauchbar macht.

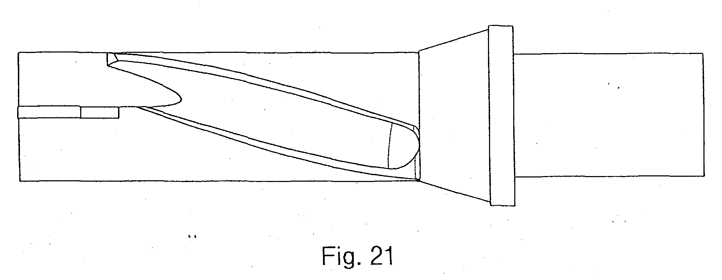

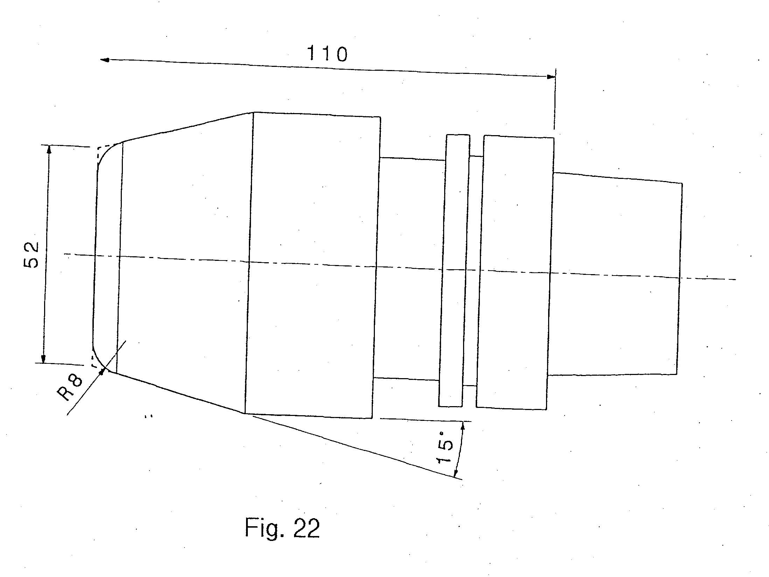

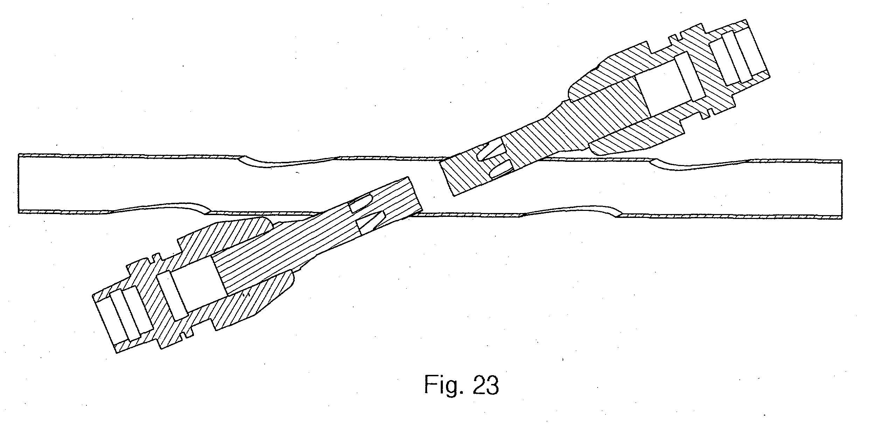

Figur 21 zeigt noch einmal einen Coromant U-Bohrer in vergrößerter Darstellung, Figur 22 eine Bohreraufnahme und Figur 23 eine vergrößerte Darstellung beim Eindringen des Fräskopfes in das Rohr.

In der gezeigten Detaildarstellung nach Figur 9 und 10 ist beim Rundtisch nur die hintere Materialklemmung eingezeichnet, weil sonst die Kombiwerkzeuge der Bohrer- und Gewindeeinheiten nicht sichtbar werden. Die Materialspannung erfolgt mit zwei Hydraulikspanneinheiten auf dem Tisch und einer Hydraulikspanneinheit in der Linearachse.

Ferner ist eine Maschine dargestellt, mit der Hohlprofile sowie Flach- bzw. Vollmaterial mit Schräglochbohrungen gefertigt werden können. Durch den gleichzeitigen Einsatz beider Spindel im Vollmaterial sind wesentlich höhere Stückzahlen möglich.

## Patentansprüche

1. Vorrichtung zur Herstellung von zwei exakt fluchtenden Bohrungen, die in einem Rohr, bevorzugt mit einem Kreisringquerschnitt, in einem Winkel im Bereich von 20° bis 80° bezogen auf die Senkrechte zum Rohr, hergestellt werden, wobei die Vorrichtung mit wenigstens zwei Fräsvorrichtungen ausgerüstet ist, wobei die beiden Fräsvorrichtungen an ihrem vorderen Ende jeweils einen Fräsbohrkopf aufnehmen, wobei beide Fräsköpfe so ausgerichtet sind, dass sie sich entlang einer gemeinsamen Geraden bewegen und beide Fräsköpfe einander so gegenüber angeordnet sind, dass sie bei der Aufeinanderzubewegung von unterschiedlichen Seiten in das Rohr eindringen.

2. Vorrichtung nach Anspruch 1,
**dadurch gekennzeichnet, dass** eine Einspannvorrichtung vorgesehen ist, mittels der das Rohr in einer gewünschten Position eingespannt wird, so dass bei der Aufeinanderzubewegung der Fräsköpfe diese zeitgleich eine Öffnung aus dem Rohr herausfräsen, wodurch die fluchtenden Bohrungen gebildet werden.

3. Vorrichtung nach einem der vorhergehenden Ansprüche,
**dadurch gekennzeichnet, dass** die Vorrichtung mit einem Bohrer versehen ist, mittels welchem senkrecht zur Bewegungsrichtung der Fräsköpfe in das Rohr eine Bohrung zur Aufnahme einer Sicherungsschraube ausgebildet wird.

4. Vorrichtung nach einem der vorhergehenden Ansprüche,
**dadurch gekennzeichnet, dass** ein Fräskopf in einer Aufnahme liegt, welche im Wesentlichen kegel- oder kegelstumpfförmig ausgebildet ist und in das auf der vom zu fräsenden Rohr abgewandten Seite der Aufnahme ein Stützkörper ausgebildet ist, welcher an der Aufnahme anliegt und eine Wegbiegung der Aufnahme der vorgesehenen Fräsrichtung verhindert.

5. Vorrichtung nach Anspruch 4,
**dadurch gekennzeichnet, dass** der Stützkörper von einer Haltevorrichtung gehalten ist, welche im vorderen, dem Fräskopf zugewandten Bereich und der dem zu fräsenden Rohr zugewandten Seite freigeschnitten ist.

6. Vorrichtung nach einem der vorhergehenden Ansprüche,
**dadurch gekennzeichnet, dass** mehrere der Fräsvorrichtungen parallel nebeneinander angeordnet sind.

7. Vorrichtung nach einem der vorhergehenden Ansprüche,
**dadurch gekennzeichnet, dass** die gegenüberliegenden Fräsvorrichtungen auf einer Platte gelagert sind und für den Vortrieb und die Aufeinanderzubewegung der Fräsvorrichtung ein Spindelantrieb vorgesehen ist.

8. Vorrichtung nach Anspruch 7,
**dadurch gekennzeichnet, dass** die Platte auf einer Unterlage schwenkbar gelagert ist, wobei eine Winkelkennzeichnung vorgesehen ist, mittels der die Platte auf einen gewünschten Winkel eingestellt werden kann, wobei dieser Winkel dem Winkel entspricht, mittels welchem die Fräsköpfe in das zu fräsende Rohr eindringen.

9. Metallrohr, bevorzugt aus VA-Stahl, **gekennzeichnet** mit wenigstens zwei Bohrungen, die exakt miteinander fluchten, wobei der Bohrungswinkel bezogen auf die Längsachse des Rohrs deutlich geringer ist als 90°, bevorzugt in einem Bereich von 15° bis 70° liegt und dass bevorzugt das Rohr mit einem Gewinde für wenigstens eine Sicherheitsschraube versehen ist, wobei dieses Gewinde um etwa 90° versetzt in zur Längsachse des Rohrs liegt.

10. Metallrohr nach Anspruch 9,
**dadurch gekennzeichnet, dass** mehrere der fluchtenden Bohrungen nebeneinander angeordnet sind.

11. Verwendung eines Metallrohrs nach einem der vorhergehenden Ansprüche als Metallgeländerpfosten, insbesondere für Treppengeländer.
